# FASCICULE DE BREVET EUROPEEN

(11) **EP 1 963 635 B1**
(45) Date de publication et mention de la délivrance du brevet: **26.08.2009**
(21) Numéro de dépôt: 06842056.1
(22) Date de dépôt: 29.11.2006
(51) Int. Cl.: F01N 9/00, F02D 41/02

(54) **PROCEDE ET SYSTEME DE REGENERATION DU FILTRE A PARTICULES D'UN MOTEUR THERMIQUE**
VERFAHREN UND SYSTEM ZUR WIEDERHERSTELLUNG EINES TEILCHENFILTERS FÜR EINEN VERBRENNUNGSMOTOR
METHOD AND SYSTEM FOR COMBUSTION ENGINE PARTICULATE FILTER REGENERATION

(30) Priorité: 20.12.2005 FR 0512950
(43) Date de publication de la demande: 03.09.2008
(73) Titulaire: RENAULT S.A.S., 92100 Boulogne Billancourt (FR)
(72) Inventeur: ETCHEVERRY, Céline, F-92330 Sceaux (FR); GODON, Fabien, F-94400 Vitry sur Seine (FR); DUFAY, Eric, F-91760 Itteville (FR); PILLOT, Adrien, F-91700 Sainte Genevieve des Bois (FR)
(86) Numéro de dépôt international: PCT/FR2006/051245
(87) Numéro de publication internationale: WO 2007/071862

(56) Documents cités:
- EP-A- 1 245 801
- PATENT ABSTRACTS OF JAPAN vol. 1995, no. 06, 31 juillet 1995 (1995-07-31) & JP 07 077030 A (ISUZU CERAMICS KENKYUSHO:KK), 20 mars 1995 (1995-03-20)

## Description

La présente invention concerne un procédé et un système de régénération du filtre à particules disposé dans la ligne d'échappement d'un moteur thermique en particulier d'un moteur diesel.

La masse de suie stockée dans le filtre à particules est aujourd'hui, soit calculée à partir de l'écart de pression entre l'amont et l'aval du filtre à particules dans la ligne d'échappement, soit estimée par un modèle d'émission de particules qui relie les paramètres moteurs à la production de particules.

La perte de charge mesurée aux bornes du filtre ou la quantité de particules émises lors du fonctionnement-du moteur est directement reliée à la masse de suie contenue dans le filtre. Lorsque celle-ci atteint un niveau prédéfini, la régénération du filtre est déclenchée. Le niveau de masse de suie stockée dans le filtre au-delà duquel la régénération est nécessaire est défini par les dégradations de performances du moteur engendrées par l'augmentation de la perte de charge dans la ligne d'échappement. Des régénérations trop fréquentes engendrent une dilution importante de gasoil dans l'huile de lubrification moteur, qui au-delà d'un certain seuil devient dangereuse pour l'intégrité du moteur, et des régénérations trop espacées peuvent aboutir au colmatage du filtre, qui lui-même provoque la mise hors service du moteur.

Des procédés de régénération des filtres à particules sont décrits par exemple dans les FR2836956 et FR2864146.

La mesure de la pression différentielle aux bornes du filtre à particules ne permet pas une estimation précise de la masse de suie stockée dans toutes les conditions de fonctionnement du moteur. Ainsi, lorsque les émissions de NO₂ en sortie du moteur sont assez importantes il se produit une oxydation partielle et non homogène des suies stockées dans le filtre qui provoque une chute de la perte de charge aux bornes du filtre. Cette diminution de la pression différentielle n'est pas proportionnelle à la quantité de particules oxydées et il en résulte un écart entre la masse de suie estimée par l'information pression différentielle et la masse de suie réellement présente dans le filtre.

De plus, une partie des suies piégées par le filtre ne sont pas brûlées lors de sa régénération.

Ces résidus qui se stockent dans le filtre provoquent une augmentation de la pression différentielle résiduelle aux bornes du filtre, ce qui diminue la quantité de particules qui peut être stockée avant d'atteindre le seuil établi pour le déclenchement de la régénération. Or la détermination de la masse de résidus contenus dans le filtre à particules est aujourd'hui approximative ce qui engendre une incertitude sur la pression différentielle résiduelle aux bornes du filtre et donc sur l'estimation de la masse de suie dans le filtre par la mesure de pression différentielle. Il est à noter que cette incertitude de mesure augmente avec le temps en même temps que la masse de résidus stockés dans le filtre.

De plus, lors d'un démarrage en conditions froides ou d'un arrêt prolongé, la pression différentielle aux bornes du filtre peut chuter fortement, la condensation d'eau pouvant réorganiser les suies et libérer certains canaux.

Les erreurs d'estimation de la quantité de particules stockées dans le filtre vont alors engendrer des régénérations trop fréquentes ou trop espacées ce qui dans tous les cas est susceptible de provoquer la mise hors service du moteur.

Le but de la présente invention est de remédier aux inconvénients des procédés et systèmes connus de régénération des filtres à particules.

L'invention vise ainsi un procédé de régénération du filtre à particules disposé dans la ligne d'échappement d'un moteur thermique dans lequel on mesure un paramètre représentatif de la masse de suie accumulée dans le filtre, on déclenche la régénération du filtre lorsque ledit paramètre représentatif dépasse un seuil prédéterminé et on arrête la régénération lorsque ledit paramètre chute en dessous d'un certain seuil.

Un tel procédé est décrit dans la demande de brevet européen EP 1 245 801 A2. Ce procédé ne permet pas de remédier aux inconvénients cités ci-dessus concernant la régénération des filtres à particules.

Suivant l'invention, le procédé de régénération est caractérisé par les étapes suivantes :
a) après chaque mise en route du moteur thermique on mesure un paramètre représentatif de l'état du moteur thermique et/ou de la ligne d'échappement,
b) lorsque le paramètre mesuré révèle que le moteur et/ou la ligne d'échappement sont froids, on fige le paramètre représentatif de la masse de suie accumulée mesuré avant le dernier arrêt du moteur,
c) on détermine continuellement l'écart entre le paramètre représentatif de cette masse figée et le paramètre représentatif de la masse mesurée à l'instant t,
d) lorsque cet écart a convergé, on ajoute cet écart au paramètre représentatif de la masse figée et on utilise cette valeur corrigée pour la poursuite du processus de régénération.

Le procédé selon l'invention permet ainsi d'éviter de détecter à froid une masse de suie faussée par la condensation.

Selon une version préférée de l'invention, lors des mises en route ultérieures du moteur thermique :
- lorsque le paramètre mesuré révèle que le moteur et/ou la ligne d'échappement- sont froides, on fige le paramètre représentatif de la masse corrigée selon l'étape d),
- on détermine continuellement l'écart entre le paramètre représentatif de la masse corrigée figée et le paramètre représentatif de la masse mesurée à l'instant t,
- lorsque cet écart a convergé, on ajoute cet écart au paramètre représentatif de la masse corrigée figée et on utilise cette valeur corrigée pour la poursuite du processus de régénération.

Dans une version avantageuse de l'invention, le paramètre représentatif de la masse de suie accumulée dans le filtre est la différence de pression entre l'entrée et la sortie du filtre.

De préférence également le paramètre représentatif de l'état du moteur thermique et/ou de la ligne d'échappement est la température.

Avantageusement, le processus est réinitialisé après chaque régénération complète du filtre.

Selon un autre aspect de l'invention, le système de régénération du filtre à particules disposé dans la ligne d'échappement d'un moteur thermique comprenant une unité de gestion de la régénération du filtre, au moins un capteur pour mesurer un paramètre représentatif de la masse de suie accumulée dans le filtre, des moyens pour déclencher la régénération du filtre, lorsque ledit paramètre dépasse un seuil prédéterminé et pour arrêter la régénération lorsque ledit paramètre chute en dessous d'un certain seuil est caractérisé en ce qu'il comprend :
a) au moins un capteur pour mesurer, après chaque mise en route du moteur thermique, un paramètre représentatif de l'état du moteur thermique et/ou de la ligne d'échappement,
b) des moyens pour figer le paramètre représentatif de la masse de suie mesuré avant le dernier arrêt du moteur, lorsque le capteur détecte que le moteur et/ou la ligne d'échappement sont froids.
c) des moyens pour déterminer continuellement l'écart entre le paramètre représentatif de cette masse figée et le paramètre représentatif de la masse mesurée à l'instant t,
d) des moyens pour ajouter cet écart au paramètre représentatif de la masse figée, lorsque cet écart a convergé vers une valeur stable.

D'autres particularités et avantages de l'invention apparaîtront encore tout au long de la description ci-après.

Aux dessins annexés, donnés à titre d'exemples non limitatifs :
- la figure 1 est un schéma d'ensemble d'un moteur diesel turbocompressé dont la ligne d'échappement est équipée d'un filtre à particules,
- la figure 2 est un organigramme illustrant le procédé, selon l'invention,
- la figure 3 est un schéma montrant l'évolution en fonction de la distance parcourue de la masse de suie accumulée dans un filtre à particules,
- la figure 4 est un diagramme montrant l'évolution de différentes masses calculées de la suie en fonction du temps.

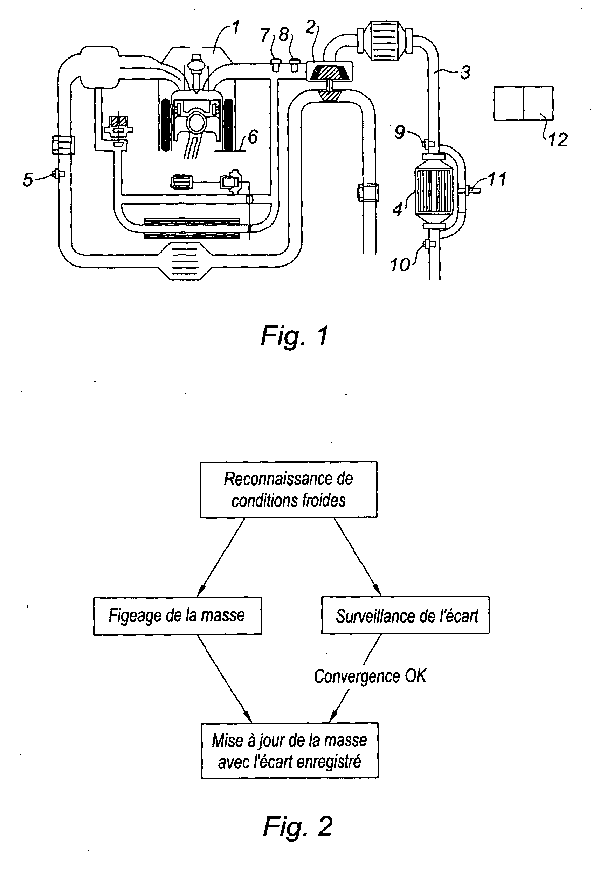

La figure 1 montre un moteur diesel 1 équipé d'un turbocompresseur 2 dont la ligne d'échappement 3 est pourvue d'un filtre à particules 4. Différents capteurs 5, 6, 7, 8, 9, 10, 11 sont disposés en plusieurs endroits pour mesurer des paramètres (température, pression) et les envoyer vers une unité de gestion 12 de la régénération du filtre 4.

De façon connue, le système de régénération du filtre à particules 4 comprend au moins un capteur pour mesurer un paramètre représentatif de la masse de suie accumulée dans le filtre 4, des moyens pour déclencher la régénération du filtre 4, lorsque ledit paramètre dépasse un seuil prédéterminé et pour arrêter la régénération lorsque ledit paramètre chute en dessous d'un certain seuil.

Le paramètre représentatif de la masse de suie accumulée dans le filtre 4 peut être par exemple la différence de pression entre l'entrée et la sortie du filtre 4, mesurée par les capteurs 9, 10, 11.

Selon le procédé conforme à l'invention, après chaque mise en route du moteur thermique, on mesure au moyen d'un ou plusieurs capteurs, un paramètre représentatif de l'état ou des conditions du moteur thermique et/ou de la ligne d'échappement. Cet état peut être la température du moteur thermique et/ou de la ligne d'échappement. Lorsque le paramètre mesuré, tel que la température révèle que le moteur et/ou la ligne d'échappement sont froids, ce qui implique la présence de condensation dans le filtre 4, l'unité de gestion 12 fige le paramètre représentatif de la masse de suie accumulée, mesuré juste avant le dernier arrêt du moteur. Ainsi l'unité de gestion ne prend pas en compte la masse de suie accumulée dans le filtre 4, après la mise en route du moteur, car cette masse est faussée par la condensation.

L'unité de gestion 12 détermine ensuite continuellement l'écart entre le paramètre représentatif de la masse figée ci-dessus et le paramètre représentatif de la masse mesurée à l'instant t.

Lorsque cet écart a convergé c'est-à-dire lorsque les températures mesurées du moteur thermique et/ou de la ligne d'échappement sont devenues stables, l'unité de gestion 12 ajoute l'écart ci-dessus au paramètre représentatif de la masse figée.

L'unité de gestion 12 utilise ensuite la valeur corrigée de la masse ci-dessus pour la poursuite du processus de régénération.

Les étapes ci-dessus sont schématisées sur la figure 2.

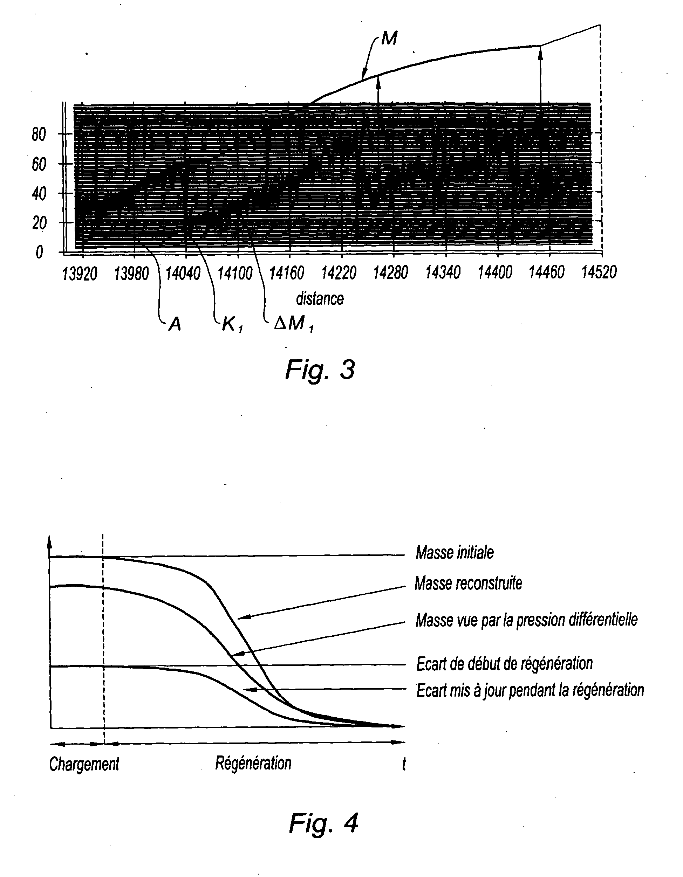

Lors des mises en route ultérieures du moteur thermique :
- lorsque le paramètre mesuré représentatif de la masse révèle que le moteur et/ou la ligne d'échappement sont froids, l'unité fige le paramètre représentatif de la masse corrigée (c'est-à-dire incrémenté de l'écart ci-dessus),
- ensuite l'unité de gestion détermine comme précédemment l'écart entre le paramètre représentatif de la masse corrigée figée et le paramètre représentatif de la masse mesurée à l'instant t,
- lorsque cet écart a de nouveau convergé, l'unité de gestion 12 ajoute ou incrémente cet écart au paramètre représentatif de la masse corrigée figée et,
- cette valeur de la masse corrigée est utilisée par l'unité de gestion 12 pour la poursuite du processus de régénération. La figure 3 illustre le procédé ci-dessus.

Dans une première phase A, on voit une évolution de la masse de suie jusqu'à un arrêt prolongé du moteur au kilométrage K₁.

A la remise en route du moteur, la masse est incrémentée d'un écart ΔM₁, ce qui permet d'obtenir une masse reconstruite M.

Après les arrêts ultérieurs aux kilométrages K1,K2 etc... la masse est de nouveau incrémentée d'une valeur ΔM₂ + ΔM₁ puis ΔM₃ + ΔM₂ + ΔM₁ et ainsi de suite.

La figure 4 montre l'évolution au cours du temps, après une période de chargement de l'unité de gestion de la masse initiale, de la masse déterminée par la pression différentielle mesurée entre l'entrée et la sortie du filtre 4, de l'écart entre la masse mesurée et la masse figée au début de la génération et l'écart de masse mis à jour pendant la régénération.

## Revendications

1. Procédé de régénération du filtre à particules (4) disposé dans la ligne d'échappement (3) d'un moteur thermique (1) dans lequel on mesure un paramètre représentatif de la masse de suie accumulée dans le filtre (4), on déclenche la régénération du filtre (4) lorsque ledit paramètre représentatif dépasse un seuil prédéterminé et on arrête la régénération lorsque ledit paramètre chute en dessous d'un certain seuil, **caractérisé par** les étapes suivantes :
a) après chaque mise en route du moteur thermique, on mesure un paramètre représentatif de l'état du moteur thermique et/ou de la ligne d'échappement,
b) lorsque le paramètre mesuré révèle que le moteur et/ou la ligne d'échappement sont froids, on fige le paramètre représentatif de la masse de suie accumulée mesuré avant le dernier arrêt du moteur,
c) on détermine continuellement l'écart entre le paramètre représentatif de cette masse figée et le paramètre représentatif de la masse mesurée à l'instant t,
d) lorsque cet écart a convergé vers une valeur stable, on ajoute cet écart au paramètre représentatif de la masse figée et on utilise cette valeur corrigée pour la poursuite du processus de régénération.

2. Procédé selon la revendication 1, **caractérisé en ce que** lors des mises en route ultérieures du moteur thermique :
- lorsque le paramètre mesuré révèle que le moteur et/ou la ligne d'échappement sont froids, on fige le paramètre représentatif de la masse corrigée selon l'étape d),
- on détermine continuellement l'écart entre le paramètre représentatif de la masse corrigée figée et le paramètre représentatif de la masse mesurée à l'instant t,
- lorsque cet écart a convergé vers la valeur stable, on ajoute cet écart au paramètre représentatif de la masse corrigée figée et on utilise cette valeur corrigée pour la poursuite du processus de régénération.

3. Procédé selon l'une des revendications 1 ou 2, **caractérisé en ce que** le paramètre représentatif de la masse de suie accumulée dans le filtre (4) est la différence de pression entre l'entrée et la sortie du filtre (4).

4. Procédé selon l'une des revendications 1 à 3, **caractérisé en ce que** le paramètre représentatif de l'état du moteur thermique et/ou de la ligne d'échappement est la température.

5. Procédé selon l'une des revendications 1 à 4, **caractérisé en ce que** le processus est réinitialisé après chaque régénération complète du filtre (4).

6. Système de régénération du filtre à particules (4) disposé dans la ligne d'échappement d'un moteur thermique comprenant une unité de gestion (12) de la régénération du filtre (4), au moins un capteur pour mesurer un paramètre représentatif de la masse de suie accumulée dans le filtre (4), des moyens pour déclencher la régénération du filtre (4), lorsque ledit paramètre dépasse un seuil prédéterminé et pour arrêter la régénération lorsque ledit paramètre chute en dessous d'un certain seuil, **caractérisé en ce qu'**il comprend :
- au moins un capteur pour mesurer, après chaque mise en route du moteur thermique, un paramètre représentatif de l'état du moteur thermique et/ou de la ligne d'échappement,
- des moyens pour figer le paramètre représentatif de la masse de suie mesuré avant le dernier arrêt du moteur, lorsque le capteur détecte que le moteur et/ou la ligne d'échappement sont froids,
- des moyens pour déterminer continuellement l'écart entre le paramètre représentatif de cette masse figée et le paramètre représentatif de la masse mesurée à l'instant t,
- des moyens pour ajouter cet écart au paramètre représentatif de la masse figée, lorsque cet écart a convergé vers une valeur stable.

## Claims

1. Method for regenerating the particulate filter (4) placed in the exhaust line (3) of an internal combustion engine (1) in which a parameter representative of the mass of soot accumulated in the filter (4) is measured, the regeneration of the filter (4) is started when said representative parameter exceeds a predefined threshold, and the regeneration is stopped when said parameter falls below a certain threshold, **characterized by** the following steps:
a) every time the internal combustion engine is started, a parameter representative of the status of the internal combustion engine and/or of the exhaust line is measured,
b) when the measured parameter reveals that the engine and/or the exhaust line is/are cold, the parameter representative of the mass of soot accumulated, measured before the engine was last turned off, is frozen,
c) the difference between this frozen mass parameter and the parameter representative of the mass measured at time t is continuously determined,
d) when this difference has been resolved by convergence to a stable value, the difference is added to the frozen mass parameter and this corrected value is used for the ongoing regeneration process.

2. Method according to Claim 1, **characterized in that** during the subsequent startups of the internal combustion engine:
- when the measured parameter reveals that the engine and/or the exhaust line is/are cold, the representative mass parameter corrected according to step d) is frozen,
- the difference between the frozen corrected mass parameter and the parameter representative of the mass measured at time t is continuously determined,
- when this difference has been resolved by convergence to the stable value, the difference is added to the frozen corrected mass parameter and this corrected value is used for the ongoing regeneration process.

3. Method according to either of Claims 1 and 2, **characterized in that** the parameter representative of the mass of soot accumulated in the filter (4) is the pressure difference between the inlet and outlet of the filter (4) .

4. Method according to one of Claims 1 to 3, **characterized in that** the parameter representative of the status of the internal combustion engine and/or of the exhaust line is the temperature.

5. Method according to one of Claims 1 to 4, **characterized in that** the process is reinitialized after each complete regeneration of the filter (4).

6. System for regenerating the particulate filter (4) placed in the exhaust line of an internal combustion engine, comprising a unit (12) for managing the regeneration of the filter (4), at least one sensor for measuring a parameter representative of the mass of soot accumulated in the filter (4), means for initiating the regeneration of the filter (4), when said parameter exceeds a predefined threshold, and for stopping the regeneration when said parameter falls below a certain threshold, **characterized in that** it comprises:
a) at least one sensor for measuring, every time the internal combustion engine is started, a parameter representative of the status of the internal combustion engine and/or of the exhaust line,
b) means for freezing the parameter representative of the mass of soot measured before the engine was last turned off, when the sensor detects that the engine and/or the exhaust line is/are cold,
c) means for continuously determining the difference between the frozen mass parameter and the parameter representative of the mass measured at time t,
d) means for adding this difference to the frozen mass parameter, when this difference has been resolved by convergence to a stable value.

## Patentansprüche

1. Verfahren zur Regeneration des in der Auspuffanlage (3) eines Verbrennungsmotors (1) angeordneten Partikelfilters (4), bei dem ein für die im Filter (4) angesammelte Rußmasse repräsentativer Parameter gemessen wird, die Regeneration des Filters (4) aktiviert wird, wenn der repräsentative Parameter eine vorbestimmte Schwelle überschreitet, und die Regeneration beendet wird, wenn der Parameter unter eine bestimmte Schwelle fällt, **gekennzeichnet durch** die folgenden Schritte:
a) nach jeder Inbetriebnahme des Verbrennungsmotors wird ein für den Zustand des Verbrennungsmotors und/oder der Auspuffanlage repräsentativer Parameter gemessen,
b) wenn der gemessene Parameter ergibt, dass der Motor und/oder die Auspuffanlage kalt sind, wird der vor dem letzten Abstellen des Motors gemessene, für die angesammelte Rußmasse repräsentative Parameter eingefroren,
c) die Abweichung zwischen dem für diese eingefrorene Masse repräsentativen Parameter und dem für die im Zeitpunkt t gemessene Masse repräsentativen Parameter wird kontinuierlich bestimmt,
d) wenn diese Abweichung zu einem stabilen Wert konvergiert ist, wird diese Abweichung zu dem für die eingefrorene Masse repräsentativen Parameter hinzugefügt und dieser korrigierte Wert für die Fortsetzung des Regenerationsprozesses verwendet.

2. Verfahren nach Anspruch 1, **dadurch gekennzeichnet, dass** bei den späteren Inbetriebnahmen des Verbrennungsmotors:
- wenn der gemessene Parameter ergibt, dass der Motor und/oder die Auspuffanlage kalt sind, der für die korrigierte Masse gemäß Schritt d) repräsentative Parameter eingefroren wird,
- die Abweichung zwischen dem für die eingefrorene korrigierte Masse repräsentativen Parameter und dem für die im Zeitpunkt t gemessene Masse repräsentativen Parameter kontinuierlich bestimmt wird,
- wenn diese Abweichung zu dem stabilen Wert konvergiert ist, diese Abweichung zu dem für die eingefrorene korrigierte Masse repräsentativen Parameter hinzugefügt und dieser korrigierte Wert für die Fortsetzung des Regenerationsprozesses verwendet wird.

3. Verfahren nach einem der Ansprüche 1 oder 2, **dadurch gekennzeichnet, dass** der für die im Filter (4) angesammelte Rußmasse repräsentative Parameter die Druckdifferenz zwischen dem Eingang und dem Ausgang des Filters (4) ist.

4. Verfahren nach einem der Ansprüche 1 bis 3, **dadurch gekennzeichnet, dass** der für den Zustand des Verbrennungsmotors und/oder der Auspuffanlage repräsentative Parameter die Temperatur ist.

5. Verfahren nach einem der Ansprüche 1 bis 4, **dadurch gekennzeichnet, dass** der Prozess nach jeder vollständigen Regeneration des Filters (4) rückgestellt wird.

6. System zur Regeneration des in der Auspuffanlage eines Verbrennungsmotors angeordneten Partikelfilters (4), das eine Verwaltungseinheit (12) der Regeneration des Filters (4), mindestens einen Sensor, um einen für die im Filter (4) angesammelte Rußmasse repräsentativen Parameter zu messen, Einrichtungen zum Aktivieren der Regeneration des Filters (4), wenn der Parameter eine vorbestimmte Schwelle überschreitet, und zum Beenden der Regeneration enthält, wenn der Parameter unter eine bestimmte Schwelle fällt, **dadurch gekennzeichnet, dass** es enthält:
- mindestens einen Sensor, um nach jeder Inbetriebnahme des Verbrennungsmotors einen für den Zustand des Verbrennungsmotors und/oder der Auspuffanlage repräsentativen Parameter zu messen,
- Einrichtungen, um den für die vor dem letzten Abstellen des Motors gemessene Rußmasse repräsentativen Parameter einzufrieren, wenn der Sensor erfasst, dass der Motor und/oder die Auspuffleitung kalt sind,
- Einrichtungen, um die Abweichung zwischen dem für diese eingefrorene Masse repräsentativen Parameter und dem für die im Zeitpunkt t gemessene Masse repräsentativen Parameter kontinuierlich zu bestimmen,
- Einrichtungen, um diese Abweichung zu dem für die eingefrorene Masse repräsentativen Parameter hinzuzufügen, wenn diese Abweichung zu einem stabilen Wert konvergiert ist.
